# EUROPEAN PATENT APPLICATION

(11) **EP 1 396 789 A2**
(43) Date of publication of application: **10.03.2004**
(21) Application number: 03004176.8
(22) Date of filing: 26.02.2003
(51) Int. Cl.: G06F 12/06

(54) **Information processing system having data migration device**

(30) Priority: 05.09.2002 JP 2002259522
(71) Applicant: Hitachi, Ltd., Chiyoda-ku, Tokyo 101-8010 (JP)
(72) Inventor: Iwamura, Takashige, c/o Hitachi, Ltd., Chiyoda-ku, Tokyo 100-8220 (JP); Yamamoto, Masayuki, c/o Hitachi, Ltd., Chiyoda-ku, Tokyo 100-8220 (JP); Oeda, Takashi, c/o Hitachi, Ltd., Chiyoda-ku, Tokyo 100-8220 (JP); Arai, Kouji c/o Hitachi, Ltd., Chiyoda-ku, Tokyo 100-8220 (JP)
(74) Representative: Strehl Schübel-Hopf & Partner

(57) **Abstract**

There is disclosed an information processing system for migrating data from a migration source storage subsystem in which a storage area has been housed from a host to a migration target storage subsystem. Configuration information is read out of the migration source storage subsystem, and on the basis of the information, the storage subsystem of the data migration target will be configured and a storage area will be provided. I/O connection between a network node and the migration source storage subsystem will be cut and change an IP address of the storage subsystem of the migration source. And, the storage subsystem of the migration source is caused to refuse an I/O request from any other than the storage subsystem of the migration target. On the other hand, the IP address that the storage subsystem of the migration source has used in the past will be assigned to the storage subsystem of the migration target, and information that indicates a path between the host and storage subsystem is changed is transmitted, and the data in the storage subsystem of the migration source is moved to the migration target storage subsystem. Also, by displaying a condition of the data migration on a display screen, it is possible to monitor a state of an event that occurs and a storage.

## Description

### BACKGROUND OF THE INVENTION

The present invention relates to an apparatus for managing and controlling, in an information processing system including a storage subsystem, the storage subsystem, andmore particularly to a data migration technique for migrating data of a storage area which a first storage subsystem has to a second storage subsystem.

The data migration technique that moves data of a storage area existing within a first storage subsystem to a second storage subsystem to change a storage subsystem to be used by a computer from the first storage subsystem to the second storage subsystem is effective when changing the storage subsystem from an old type of machine to a new type of machine and when no access should be obtained to the storage subsystem currently in use in order to maintain the machine and the like. As a conventional technique concerning such a data migration technique, there has been disclosed in U.S. Patent No. 6108748 a technique that performs data migration between storage subsystems while a computer is continuing access to the storage subsystem.

Also, in recent years, as a protocol for performing storage I/O between the storage subsystem and the computer, iSCSI (internet Small Computer System Interface) whose specification is currently being laid down by IETF (Internet Engineering Task Force) has been drawing attention. The iSCSI is a protocol that performs exchange of the SCSI command, control of transmission, authentication and the like on a network on which the iSCSI communicates with the TCP/IP protocol.

In the above-described technique of the U.S. Patent No. 6108748, in any other computer than a computer in which a specified OS ( for example , MVS : Multiple Virtual Storage) has been installed, switching of the access target from the first storage subsystem to the second subsystem is performed by interchanging the cables. For this reason, it has been necessary for a maintenance worker to work at a place where the host is installed, and the remote work has been difficult.

Also, since it is possible in recent years to mix a multiplicity of storage areas of plural types having different capacity and device emulation within the storage subsystem, it is complicated to configure the storage subsystem and wrong configuration is prone to be made. However, since the above-described technique of the U.S. Patent No. 6108748 has not disclosed the technique for solving this point, the maintenance worker of the storage subsystem should configure the second storage subsystem, which becomes a movement target, by means of handwork, and there is the possibility that a failure in data migration due to wrong configuration is caused.

### SUMMARY OF THE INVENTION

It is an object of the present invention to provide a data processing system capable of easily performing a change in an accesses path of the storage subsystem associated with the data migration.

It is another object of the present invention to reduce, by automatically performing an operation of configuring the migration target storage subsystem through the use of software, complicated input operations for configuration items which have been conventionally required and to reduce failure in data migration due to wrong configuration concerning the migration target storage subsystem.

It is a further object of the present invention to make it easy for a system supervisor to grasp the condition of the system during data migration by displaying the condition of an event which occurs as the data migration, on a display screen.

The present invention is realized in a system including: a host computer connected to a network, having a function for issuing an I/O; a first storage subsystem in which a storage area for storing data is formed, for processing an I/O request to be transmitted from the host computer through the network to the storage area; a second storage subsystem which becomes an object for processing the I/O request to be transmitted from the host computer through the network, and becomes a migration target of data from the first storage subsystem; and a data migration device connected to the first and second storage subsystems through a management network, for processing data migration. This data migration device configures the second storage subsystem and forms a storage area on the basis of configuration information concerning the first storage subsystem, instructs for refusing an I/O request from the host computer to the first storage subsystem, and instructs for changing the access target from the first storage subsystem to the second storage subsystem by changing an information that a network communication protocol of the host computer has and that concerns the first storage subsystem.

In a preferred example, said information that a network communication protocol is an ARP information that TCP/IP protocol stack has.

In a preferred example, a management computer for managing a system concerning the data migration is connected through a network. This management computer has means for receiving a notice concerning data migration from a data migration device, and display means for displaying a condition of data migration from the first storage subsystem to the second storage subsystem. The display means is preferably capable of displaying a condition of the data migration through an icon. Also, this management computer has a function of determining whether or not an event that has occurred is an event that occurs as a result of the data migration, and when it is an event as a result of the data migration, it is displayed on the display means together with a message concerning that event.

### BRIEF DESCRIPTION OF THE DRAWINGS

Fig. 1 is a block diagram showing hardware of a data processing system using iSCSI;
Fig. 2 is a view showing functional structure of each device of a data processing system according to the present embodiment;
Fig. 3 is a view showing outline of data migration processing between a migration source storage subsystem 100 and a migration target storage subsystem 110;
Fig. 4 is a flowchart showing a portion where data migration is performed in a storage area in which LUN has been assigned;
Fig. 5 is a flowchart showing a portion where data migration is performed in a storage area in which no LUN has been assigned;
Fig. 6 is a flowchart showing an operation of an I/O connection restoring function 222;
Fig. 7 is a flowchart showing addition or a change of information of ARP cache when a TCP/IP stack receives an ARP packet;
Fig. 8 is a view showing structure of a network information processing system according to another embodiment;
Fig. 9 is a flowchart showing a portion where data migration is performed in a storage area in which LUN has been assigned;
Fig. 10 is a flowchart showing processing of a notice receiving function 814; and
Fig. 11 is an example showing screen display for displaying a condition during data migration.

### DETAILED DESCRIPTION OF PREFERRED EMBODIMENTS

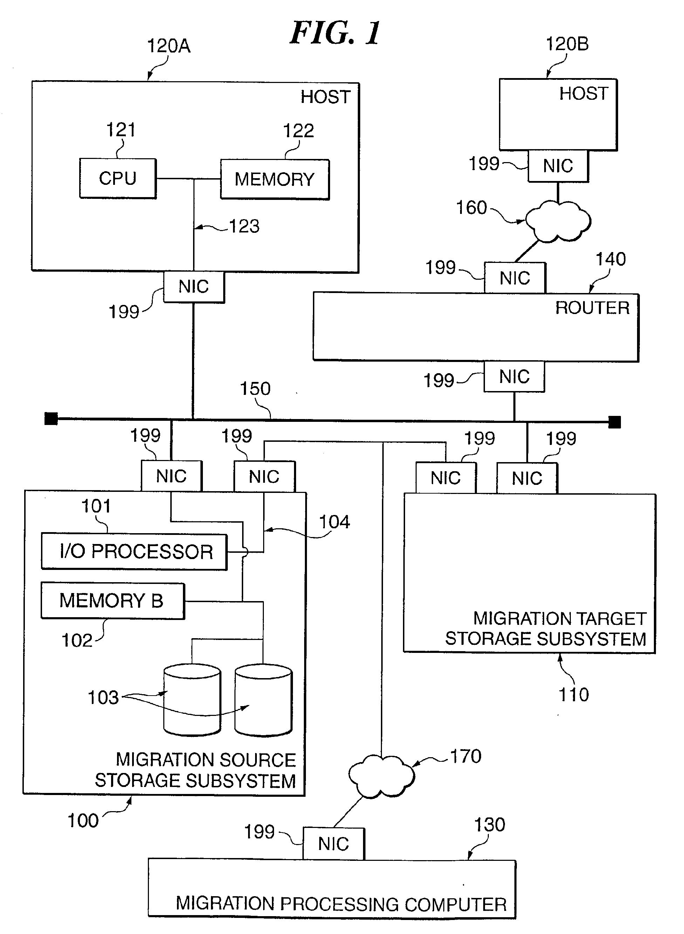

With reference to a block diagram showing hardware of a storage data processing system using the SCSI shown in Fig. 1, the description will be made of one embodiment of the present invention.

The present embodiment is an information processing system including a migration source storage subsystem 100 and a migration target storage subsystem 110 which have been connected to a local network segment 150.

The migration source storage subsystem 100 is a storage subsystem, has one or more I/O processors 101, a memory B102 and a storage device 103 like a RAID disk device, and is connected to a storage subsystem inner network 104.

The migration target storage subsystem 110 is a storage subsystem, and has a similar hardware structure to that of the migration source storage subsystem 100. For this reason, display of the contents of the storage system 100 has been omitted.

A local network segment 150 is a network to which the migration source storage subsystem 100 and the migration target storage subsystem 110 have been connected through a NIC (Network Interface Card) 199. Network node including the storage subsystem, the host computer and a relay computer (ex. router 140) , which are connected to the local network segment 150, can communicate to other network nodes without passing through the relay computer by acquiring MAC address which is identifier of NIC 199 from IP address.

An indirect connection network 160 is a network which has been connected to the local network segment 150 through the computer which relays the IP datagram. Communication between a network node to be connected to the indirect connection network 160 and a network node to be connected to the local network segment 150 is performed through the computer which relays the IP datagram. In this case, the indirect connection network 160 may be composed of one or more segments, and any network equipment may be used. Also, the indirect connection network 160 may be an internet or another wide area network, or include this or be one part thereof.

The router 140 is a computer for relaying the IP datagram, and has a NIC 199 for connecting to the local network segment 150 and the indirect connection network 160.

A host A 120A connected to the local network segment 150 and a host B 120B which is connected to the indirect connection network 160 and communicate with the migration source storage subsystem 100 or the migration target storage subsystem 110 through the medium of the router 140, are connected to such a system and perform storage I/O. The host A 120A and the host B 120B are computers such as a main frame computer, a server, a personal computer, a client terminal, a storage subsystem issuing I/O request, a work station and the like, which are accessible to the storage subsystem, any of which has CPU 121, a memory 122, and the NIC 199, and these are connected through a computer internal bus 123.

In the drawing, there have been described only the host A 120A and the host B 120B as a computer for performing storage I/O, but the present embodiment is not limited thereto. It is also possible to use a system to which one or more hosts A 120A are connected, a system to which one or more hosts B 120B are connected, or a system to which two or more hosts including hosts A 120A and hosts B 120B are connected together.

A migration processing computer 130 is a computer having a function of integrating and controlling the data migration of the present embodiment. This migration processing computer 130 is a computer such as, for example, a server, a personal computer, a client terminal, and a work station, and has CPU 121, a memory 122 and the like.

To a management network 170, there are connected the migration source storage subsystem 100 and the migration target storage subsystem 110. Also, for the management network 170, any network may be used, and further for the management network 170, the local network segment 150 or the indirect connection network 160 may be used. Also, all network nodes to be connected to the management network 170 are capable of performing communication for management with an IP address different from the IP address for storage I/O, but communication for management may be performed through the use of the IP address for storage I/O. In that case, however, since in the present embodiment, the IP address for storage is transferred to a different storage subsystem, another network node for performing communication through the use of the network for management must recognize the transfer of the IP address.

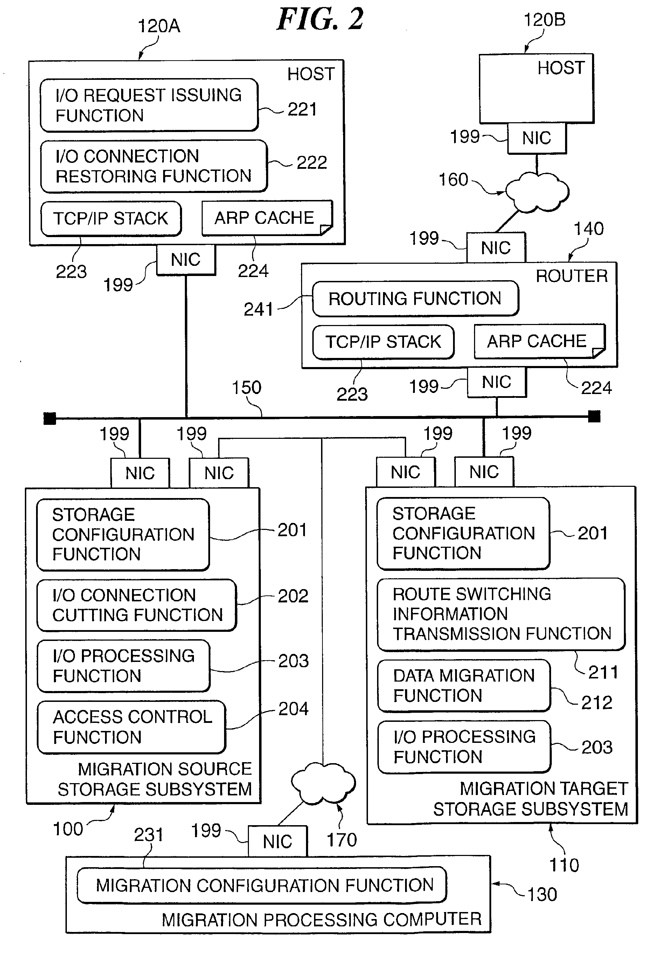

Next, with reference to Fig. 2, the description will be made of the functional structure of each device of a data processing system according to the present embodiment.

A host 120A and a host 120B have an I/O request issuing function 221, an I/O connection restoring function 222, a TCP/IP stack 223, and an ARP cache 224 respectively, and these functions or information can be realized by the CPU 121 or the memory 122 operating.

A router 140 is a computer having the TCP/IP stack 223, the ARP cache 224, and a routing function 241, and these functions or information can be realized by operation of the CPU 121 or the memory 122.

The migration source storage subsystem 100 has a storage configuration function 201, an I/O connection cutting function 202, an access control function 204 and an I/O processing function 203, which are realized when an I/O processor 101, a memory B 102 and a storage device 103 operate. In this respect, the access control function 204 is used in order to restrict the access after an I/O request issuing target is switched from the migration source storage subsystem 100 to the migration target storage subsystem 110, but is not essential. Also, the migration source storage subsystem 100 may have any other function than this.

The migration target storage subsystem 110 is realized when the I/O processor 101, the memory B 102 and the storage device 103 operate, and has the storage configuration function 201, a route switching information transmission function 211, a data migration function 212, and an I/O processing function 203. In this respect, the migration target storage subsystem 110 may have any other function than this.

Next, the details of each of these functions will be described.

First, concerning the function of the host 120A or 120B, the I/O request issuing function 221 issues an I/O request based on the iSCSI protocol to the migration source storage subsystem 100 and the migration target storage subsystem 110.

When the I/O connection with the migration source storage subsystem 100 and the migration target storage subsystem 110 is cut or the I/O processing ends in failure, the I/O connection restoring function 222 makes an attempt to re-establish the I/O connection in order to start the I/O processing again.

The TCP/IP stack 223 performs communication based on the TCP/IP protocol. In this respect, the TCP/IP stack 223 and the ARP cache 224 are also included in each of the migration source storage subsystem 100 and the migration target storage subsystem 110, but the illustration has been omitted.

An ARP (Address Resolution Protocol) cache 224 is a cache for holding corresponding information between the IP address of a network node connected to the local network segment 150 and the MAC address. In this respect, for operation of information to be included in the ARP cache 224, there are conceivable a method by transmission and reception of a packet based on the ARP protocol, a method for deleting, this information when a fixed time period has elapsed at a time when the corresponding information is received on is utilized, and a method by manual input, but information of the ARP cache may be operated through the use of any other method than this.

Concerning the function of the router 140, a routing function 241 relays the IP datagram between the local network segment 150 and the indirect connection network 160.

In the storage subsystem 100 or 110, the storage configuration function 201 receives a configuration request, a configuration reference request or a functional operation request from the outside of the devices of the migration source storage subsystem 100 and the migration target storage subsystem 110, and on the basis of these, configures and performs information output and functional execution of each storage subsystem. In this respect, there are an IP address which the storage subsystem allocates to the NIC 199, a request of cutting the I/O connection, an access control configuration and the like, and in addition to these, information and the like for authentication and encipherment that each storage has may be configured, referred to and requested for processing. Also, if the size and identifier of the storage area can be determined by the administrator or the management software when the migration source storage subsystem 100 and the migration target storage subsystem 110 provide the host A 120A and the host B 120B with a storage area respectively, these may be configured or referred to. In this respect, the storage configuration function 201 is a function for management in which SNMP (Simple Network Management Protocol) defined by RFC 1157 is regarded as an interface with the outside of the device, but any other interface than this may be used.

The I/O connection cutting function 202 cuts the I/O connection which is being connected to the migration source storage subsystem 100. In the case of the iSCSI, the present function can be realized by returning termination notice of the TCP connection to the host, but if the I/O connection restoring function 222 can detect cutting of the I/O connection or failure of I/O, it may be used. Also, the I/O connection cutting function 202 may exist on a network equipment such as a switch constituting the local network segment 150.

The I/O processing function 203 processes I/O request issued to the migration source storage subsystem 100 or the migration target storage subsystem 110.

The access control function 204 limits a host or a storage subsystem to perform I/O access to the migration source storage subsystem 100. In this respect, the IP address, the MAC address, and authentication information to be exchanged before and at issuing I/O request is used as information for identifying the host or storage subsystem. But any other information than that may be used.

In the migration target storage subsystem 110, the route switching transmission function 211 notifies a node, including the host 120A and the router 140, of an IP address or MAC address corresponding to the IP address thereto. In this respect, in the present embodiment, the information has been transmitted through the use of the ARP packet, but any other method than this may be used for transmission.

The data migration function 212 moves data of the storage area existing in the migration source storage subsystem 100 to the migration target storage subsystem 110. The data of the migration source storage subsystem 100 is transferred through the local network segment 150. Data management for, for example, an I/O request from the host 120A during data migration may be performed as described in, for example, the U.S. Patent No. 6108748. In other words, an array of bit (bit map) is provided correspondingly to a data block to be transferred, and by referring to a bit flag of this bit map, it is determined whether or not the data block has been transferred. If a data block requested from host 120A is not transferred to the migration transfer target storage subsystem 110, the I/O request may be transferred to the original storage subsystem 100 to read the data block from there for transmitting to the host 120A.

A migrationconfigurationfunction231controls migration of configuration from the migration source storage subsystem 100 to the migration target storage subsystem 110, and the entire data migration including switching of the communication route. Furthermore, the migration configuration function 231 controls the migration source storage subsystem 100 and the migration target storage subsystem 110 by communicating with the storage configuration function 201. In this respect, this function 231 is provided within the migration processing computer 130, and may exist in any other place than this. This function 231 may be provided within, for example, the migration source storage subsystem 100 or the migration target storage subsystem 110. For example, when this function 231 exists within the migration target storage subsystem 110, it is also possible to directly configure the migration target storage subsystem 110 without through the medium of the storage configuration function 201 of the storage subsystem.

In the present embodiment, the storage subsystem 100 is a migration source and the storage subsystem 110 is a migration target as described above, but there is also a case where the storage subsystem 110 becomes a migration source and the storage subsystem 100 becomes a migration target. When such a case is also taken into account, the storage subsystems 100 and 110 have both the above-described functions 201 to 204, 211 and 212.

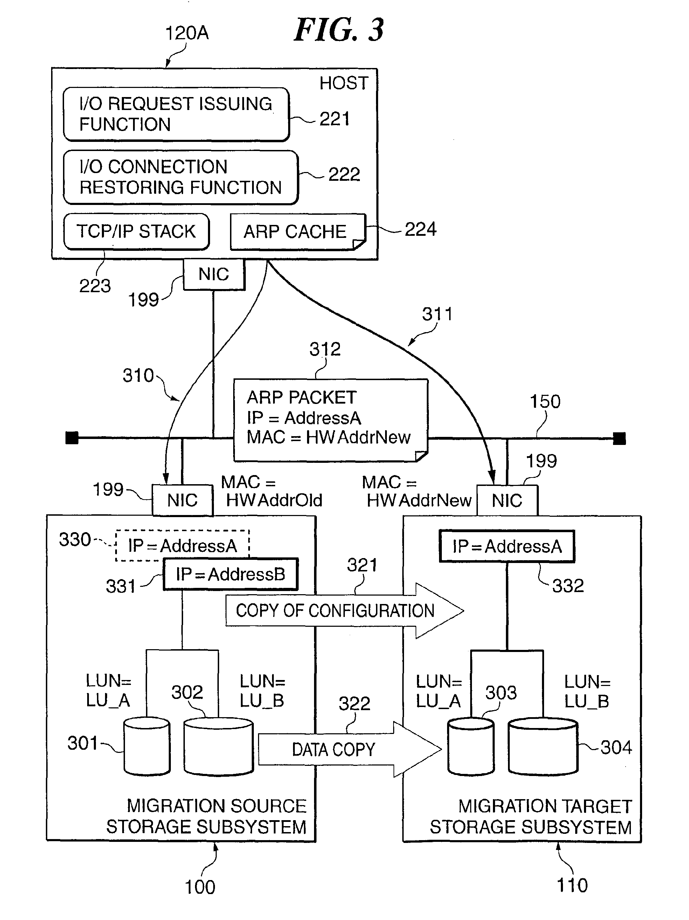

Next, with reference to Fig. 3, the description will be made of outlined operation of the present embodiment.

Fig. 3 shows a general outline of processing for migrating to the migration target storage subsystem 110 in an environment having the migration source storage subsystem 100 in which a storage area 301 and a storage area 302 have been provided within the storage subsystem, and a host 120A connected through the local network segment 150. In this case, it is assumed that the storage area 301 and the storage area 302 are assigned LU_A and LU_B respectively as an identifier (hereinafter, referred to as LUN) to be designated by the host to perform I/O processing. It is assumed that the MAC address of the NIC 199 of the migration source storage subsystem 100 is HWAddrOld, and the MAC address of NIC 199 of the migration target storage subsystem 110 is HWAddrNew. Further, it is assumed that IP address AddressA is configure to the NIC 199 of the migration source storage subsystem 100. In this respect, although in the figure, there exist only two storage areas and one host, the present invention is not limited thereto.

Hereinafter, the general outline of the operation will be described.
(1) Before the data migration, the migration source storage subsystem 100 is assigned Address A as the IP address like the box 330, and the host 120A obtains access to the storage area 301 and the storage area 302 through the Address A (access route 310). Also, the migration target storage subsystem 110 is not assigned such an Address A as the box 332, but a state in which even configuration for creating the storage area 303 and the storage area 304 has not been made will be brought about. Also, in the ARP cache 224 of the host 120A, a state in which HWAddrOld has been registered or has not been registered with the IP address as MAC address corresponding to the Address A will be brought about.
(2) In the migration target storage subsystem 110, there will be provided the same storage area (storage area 303 and storage area 304) as the storage area (storage area 301 and storage area 302) which the migration source storage subsystem 100 has. (copy of configuration 321)
(3) Next, there will be cut the I/O connection (access route 310) which has been established between the migration source storage subsystem 100 and the host 120A.
(4) Next, the IP address which has been assigned to the migration source storage subsystem 100 will be changed from such Addrress A as the box 330 to such a different Address B as the box 331.
(5) Next, the IP address of the migration target storage subsystem 110 will be assigned to Address A (box 332).
(6) Next, from the migration target storage subsystem 110, the IP address will broadcast an ARP packet 312 indicating that the MAC address corresponding to the Address A is HWAddrNew to the local network segment 150. Thereby, in the ARP cache 224 of the host A 120A, the IP address Address A is brought into correspondence with the MAC address HWAddrNew, and it becomes possible to obtain access to the migration target storage subsystem 110 through the use of the Address A as in the case of the access route B 311.
   In this respect, if the host 120A cannot receive the ARP packet 312 for some reason such as when the ARP packet 312 is broadcast during stoppage of the system or cutting of the network and the like, the host 120A operates as below on the basis of the ARP protocol.
   (A) The host 120A deletes the correspondence between the IP address (Address A) and the MAC address (HWAddrOld) which has been scheduled to be changed by the ARP packet 312 from the ARP cache. In this respect, an opportunity for this deletion process depends upon the implementation of the software installed on the host 120A. As its representative example, the execution when a fixed time period has elapsed since the host 120A ceased the use of the IP address concerned is conceivable. Also, as a different condition, when the host 120A sends the IP datagram having the Address A to the migration source storage subsystem 100 instead of the migration target storage subsystem 110, the migration target storage subsystem 100 sends a message of ICMP to be defined in RFC 792, and it is conceivable to perform the deletion process of the above-described (A) with the reception of that message as a turning point. However, even at any other opportunity for the implementation than this, the deletion process may be performed. However, if there is no correspondence concerned with the ARP cache 224 immediately after starting of the OS or the like, the present step may not be performed.
   (B) Thereafter, when the host 120A obtains access to the storage subsystem having the Address A, the information on the correspondence between the Address A and the MAC address has already been deleted from the ARP cache 224 by the process described in (A). Thus, in order to obtain the MAC address corresponding to the Address A, the host 120A will broadcast the ARP request.
   (C) The migration target storage subsystem 110 will broadcast, in response to the ARP request, an ARP reply meaning that HWNewAddr that is MAC address of its own corresponds.
   (D) The host 120A receives the ARP reply to change the ARP cache 224. If it cannot receive the ARP reply even after a lapse of a fixed time period after the execution of (B) , the host 120A may repeat from (B) again. Also, when another host performs the same step and has the ARP reply broadcast although not shown, it may receive this reply to change the ARP cache 224.
      Therefore, even if the host 120A cannot receive the ARP packet 312 for some reason, it is possible to obtain an ARP packet including correspondence between the MAC address and the IP address to be transmitted from the migration target storage subsystem 110 again.
   (7) Finally, the migration target storage subsystem 110 copies data of the storage area 301 and the storage area 302 to the storage area 303 and the storage area 304 while transferring the I/O request from the host 120A to the migration source storage subsystem 100 (data copy 322).

Since it is not necessary for all the hosts to change the ARP information at the same time, even though one host may fail in change of access path route of the storage subsystem associated with the data migration, the remaining hosts can switch normally, and as regards a host which fails, it will be possible to change the access path route later.

Next, the description will be made of the processing of the migration configuration function 231.

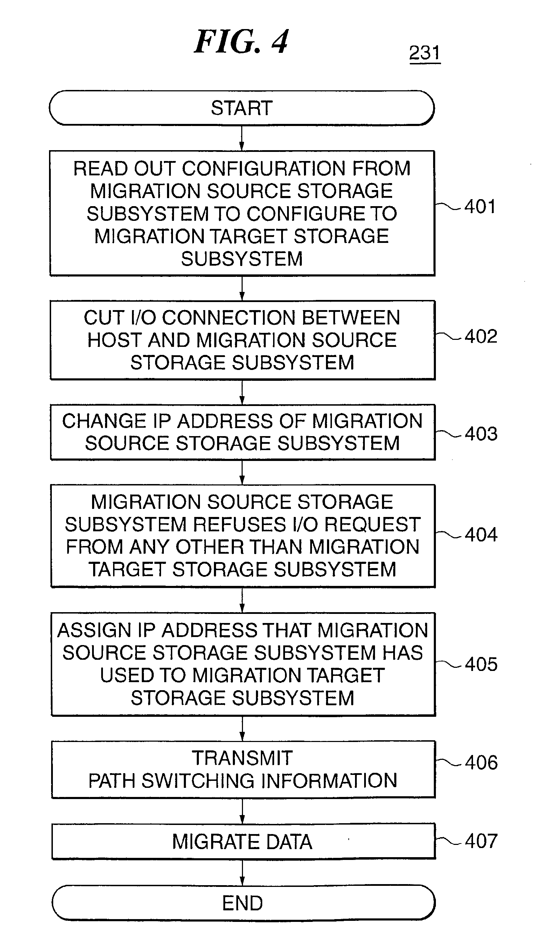

Fig. 4 is a flowchart showing a portion where data migration is performed in a storage area to which LUN has been assigned in the process of the migration configuration function 231.

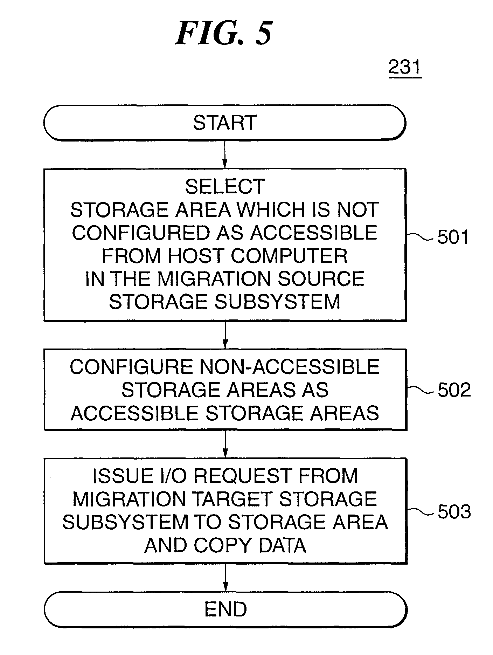

Fig. 5 is a flowchart showing a portion where data migration is performed in a storage area to which no LUN has been assigned in the process of the migration configuration function 231.

In this respect, although not clearly described in the description of each step, when the migration configuration function 231 refers to and controls each function and the configuration information inside the migration source storage subsystem 100 and the migration target storage subsystem 110, the migration configuration function 231 performs through the storage configuration function 201.

Hereinafter, the flow of Fig. 4 will be described.
(1) Read out configuration information from the migration source storage subsystem 100 to configure the migration target storage subsystem 110 and to create a storage area on the basis of the information. As information to be read out and configured configure, there are capacity, emulation type and LUN that each storage area has, required to create the storage area, but in addition to these, authentication information required to certify the migration source storage subsystem 100, configuration of access control that the migration source storage subsystem, and the like may be regarded. As regards a configuration method, there is a process for automatically configuring all values of information read out from the migration source storage subsystem 100 as they are. But it may be added to retain items of attribute that is not migrated, check the configuration information whether the configuration information includes the appropriate items before configuring the migration target storage subsystem 110, and if the appropriate item is included, it does not use for configuring the migration target storage subsystem 110, and other process may be used. Also, the correspondence between the storage area created in the migration target storage subsystem 110 and the storage area in the migration source storage subsystem 100 which become a data migration source will be retained (Step 401).
(2) Request the I/O connection cutting function 202 of the migration source storage subsystem 100 to cut the I/O connection between the network node and the migration source storage subsystem 100. Thereby, for example, the I/O connection between the host 120A and the migration source storage subsystem 100 will be cut (Step 402).
(3) After the I/P address assigned to the migration source storage subsystem 100 is stored, another IP address not used by other network nodes is assigned to the migration source storage subsystem 100 (Step 403). In this respect, at this point of time, a renewal of the authentication information may be applied to a computer for handling the authentication information.
(4) When the migration source storage subsystem 100 has the access control function 204, request the access control function 204 of the migration source storage subsystem 100 to configure preventing the I/O request from being received from any other than the migration target storage subsystem 110 (Step 404).
(5) Assign the previous IP address of the migration source storage subsystem 100 stored in the Step 403 to the migration target storage subsystem 110 (Step 405).
(6) Request the route switching information transmission function 211 of the migration target storage subsystem 110 to transmit a route switching information (Step 406). The route switching information is the MAC address of the migration target storage subsystem 110 and the IP address stored in the Step 403, and these addresses are transmitted to notify the node including the host 120A or the router.
(7) Pass the correspondence information retained in the Step 401 to the data migration function 212 of the migration target storage subsystem 110, and request the migration target storage subsystem 110 so as to move data of the storage area existing in the migration source storage subsystem 100 to the migration target storage subsystem 110 (Step 407).

Next, the description will be made of Fig. 5. In this respect, the flow of Fig. 5 will be performed after the process of Fig. 4 is executed, but if the process of the Step 401 could be executed in advance, it may be executed at a timing independent of the process of Fig. 4.
(1) Select storage areas which are not configured as accessible from the host 120A, in the migration source storage subsystem (Step 501).
(2) Configure non-accessible storage areas as accessible storage areas by assigning accessible LUNs which are currently unused (Step 502).
(3) The I/O request from the migration target storage subsystem 110 to the storage area is issued to thereby request the data migration function 212 of the migration target storage subsystem 110 for processing, and to migrate data of the storage area selected in the Step 501 through the use of the LUN assigned (Step 503).

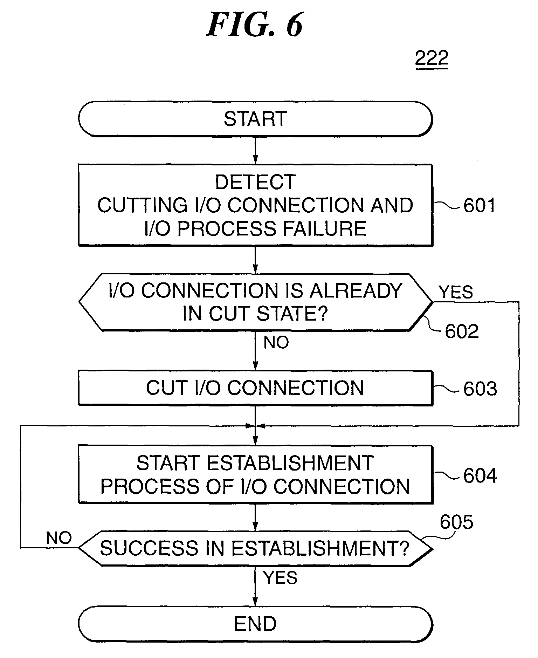

Next, with reference to the flowchart of Fig. 6, the description will be made of the operation of the I/O connection restoring function 222.
(1) In accordance with the process described below, detect the cutting I/O connection and I/O process failure. In the case of the iSCSI, since TCP is used as a transport layer, the cutting can be detected by requesting the TCP/IP stack 223 to confirm the state of the TCP session. Also, the failure in the I/O process can be confirmed by inquiring of the I/O request issuing function 221 (Step 601).
(2) If the applicable I/O connection is not in a cut state, perform a cutting process (Step 602, Step 603).
(3) Repeat an establishment process until I/O connection with the migration source storage subsystem 100 or the migration target storage subsystem 110 is established (Step 604, Step 605).

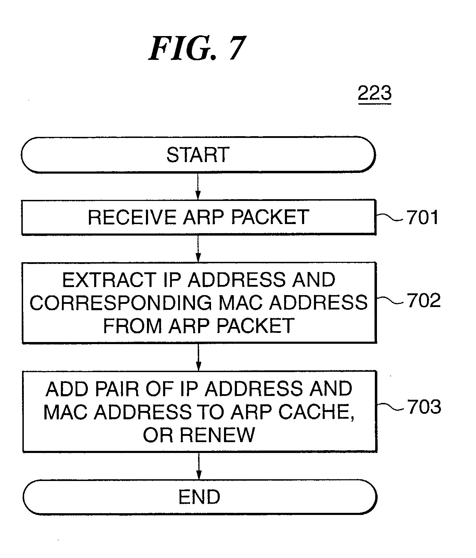

Next, with reference to the flowchart of Fig. 7, the description will be made of the addition or change of the information of the ARP cache 224 when the TCP/IP stack 223 receives the ARP packet.
(1) Receive an ARP packet representing the ARP request or the ARP reply (Step 701).
(2) Extract the IP address and the corresponding MAC address from the ARP packet received (Step 702).
(3) Add a pair of the IP address and the MAC address to the ARP cache 224 extracted by the Step 702, and if the MAC address corresponding to the IP address has already been registered, renew it to a new MAC address (Step 703).

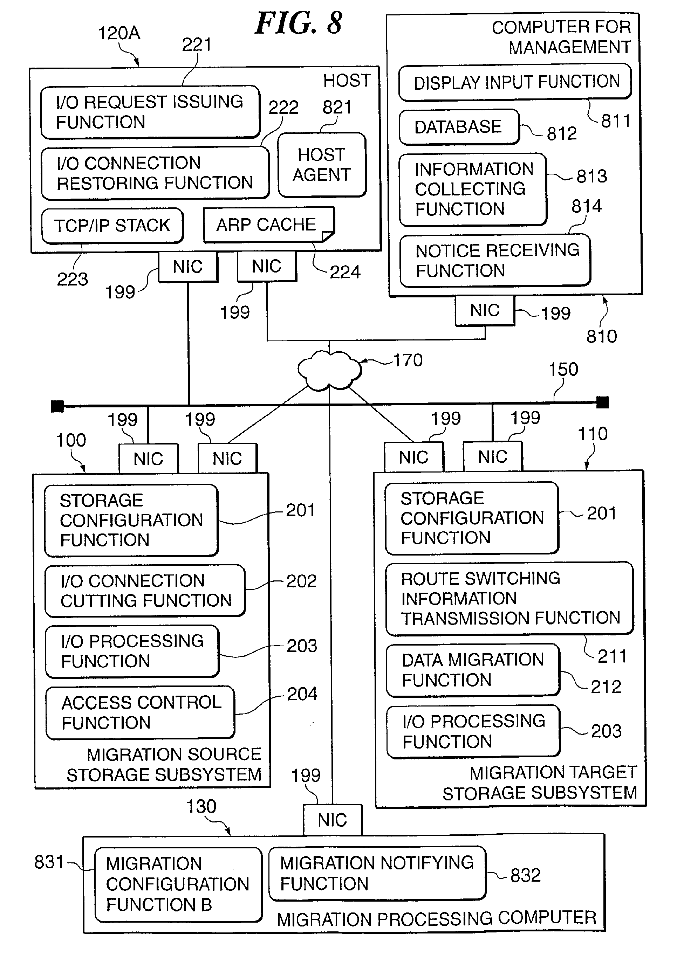

Next, with reference to Fig. 8, the description will be made of another embodiment of the present invention.

The present embodiment is an information processing system obtained by adding means for conducting system management to the information processing system of the first embodiment described above.

The present embodiment differs from the first embodiment in that a computer for management 810 is added, that accordingly a host agent 821 is added to the host 120A, that a migration notifying function 832 is added to the migration processing computer 130, and that the configuration migration function 231 is changed to a migration configuration function B 831.

The computer for management 810 is such a computer as a work station or a personal computer which becomes important when conducting management such as obstacle observation and performance management of the entire information processing system, and has a display input function 811, a database 812, an information collecting function 813 and a notice receiving function 814. In this respect, the computer for management may have any other function than these, for example, an alarm notifying function to the administrator, a function for configuring the host and storage, or a function for requesting its configuration.

Hereinafter, the description will be made of each function that the computer for management 810 has.

The database 812 accumulates information of the host, the storage subsystem, network equipment and the like which are to be managed by the computer for management 810, and provides information in response to request from the display input function.

The information collecting function 813 collects information of hosts, storage subsystems, network equipment and the like including the host A120, the migration source storage subsystem 100 and the migration target storage subsystem 110. In the information collecting method of the present embodiment, the information collecting function 813 obtains information by requesting the host agent 821 and the storage configuration function 201 to acquire information, but information may be obtained by any other method than this one.

The display input function 811 has a display unit and an input unit, and forms an operating display environment for managing the entire information processing system. In this respect, the display screen of the display unit displays kinds of events such as restarting of the process, obstacles, and changes in performance in the information processing system resulting from the data migration process. Also, as kinds of events to be displayed, there are re-establishment of I/O connection in the host 120A, an increase in amount of data that passes through the local network segment 150, changes in access performance to the storage area which exists within the migration source storage subsystem 100, and the like.

The notice receiving function 814 receives an event notice to be issued from the migration notifying function 832, and in response thereto, controls the information collecting function 813 and the display input function 811. However, the notice receiving function 814 may perform any other process than this one. In this respect, a trap of SNMP (Simple Network Management Protocol) defined in RFC 1157 as means for notifying of events can be used, and any other method than this one may be used.

The host agent 821 acquires the system configuration, configuration information, obstacle information, performance information and the like of the host 120A, and transfers to the computer 810 for management. In this respect, the host agent 821 may have any other function as this one, for example, a function for changing the configuration of the host 120A in response to a request from a remote place, and the like.

The configuration migration function B 831 is equal to the configuration migration function 231 in the first embodiment, and has a new process for controlling the migration notifying function 832 added.

The migration notifying function 832 notifies the notice receiving function 814 of events. In this respect, the present function may exist in any other than the migration processing computer 130, and may exist in the migration source storage subsystem 100 and the migration target storage subsystem 110.

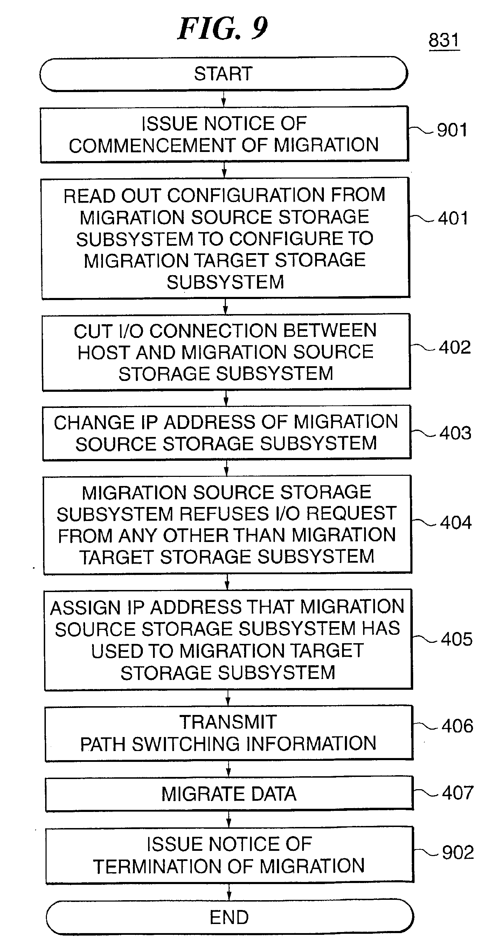

Next, with reference to the flowchart of Fig. 9, the description will be made of the process of the configuration migrating function 831 where data migration is performed in a storage area in which LUN has been assigned.
(1) Before starting data migration, request the migration notifying function 832 to issue a notice of commencement of data migration. In this respect, together with the notice of commencement of migration, information indicating storage subsystems which become the migration source and migration target (in this case, the migration source storage subsystem 100 and the migration target storage subsystem 110 respectively) may also be transmitted (Step 901).
(2) Perform the data migration process. In this respect, the contents of the process are equal to Steps 401 to 407 of Fig. 4 (Steps 401 to 407).
(3) Request the migration notifying function 832 to issue a notice of termination of data termination. Even in this case, together with the notice, information indicating storage subsystems which become the migration source and migration target (in this case, the migration source storage subsystem 100 and the migration target storage subsystem 110 respectively) may also be transmitted (Step 902).

In this respect, if in the migration source storage subsystem 100 there exists a storage area in which no LUN has been assigned, the flow of Fig. 5 according to the first embodiment will be executed. As the process in that case, before the event notification of the Step 902 is performed, the process of Fig. 5 will be executed, and the event notification will be performed at this point of time whereat the entire migration of storage area has been completed.

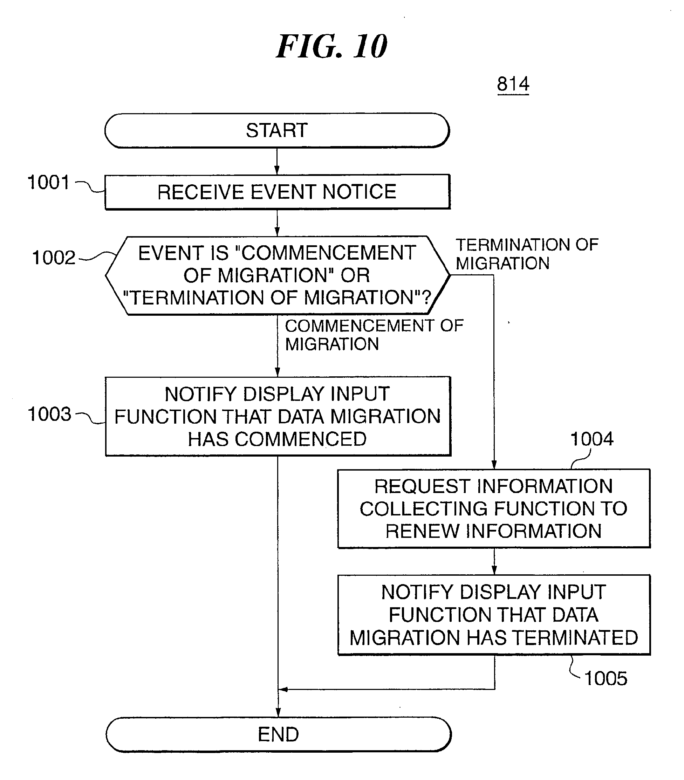

Next, with reference to the flowchart of Fig. 10, the description will be made of the process of the notice receiving function 814.
(1) Receive an event notice. If the kind of the event notice is commencement of migration, the sequence will proceed to a Step 1003, and if termination of migration, the sequence will proceed to a Step 1004 (Step 1001, 1002).
(2) Notify the display input function 811 that data migration has commenced. In this respect, if the event notice includes an identifier indicating storage subsystems of the migration source and the migration target, the display input function 811 may be notified of these pieces of information (Step 1003).
(3) Request the information collecting function 813 to renew the information concerning the information processing system which the computer for management 810 has (Step 1004).
(4) Notify the display input function 811 that the data migration has been terminated. In this respect, if the event notice includes an identifier indicating storage subsystems of the migration source and the migration target, the display input function 811 may be notified of these pieces of information (Step 1005) .

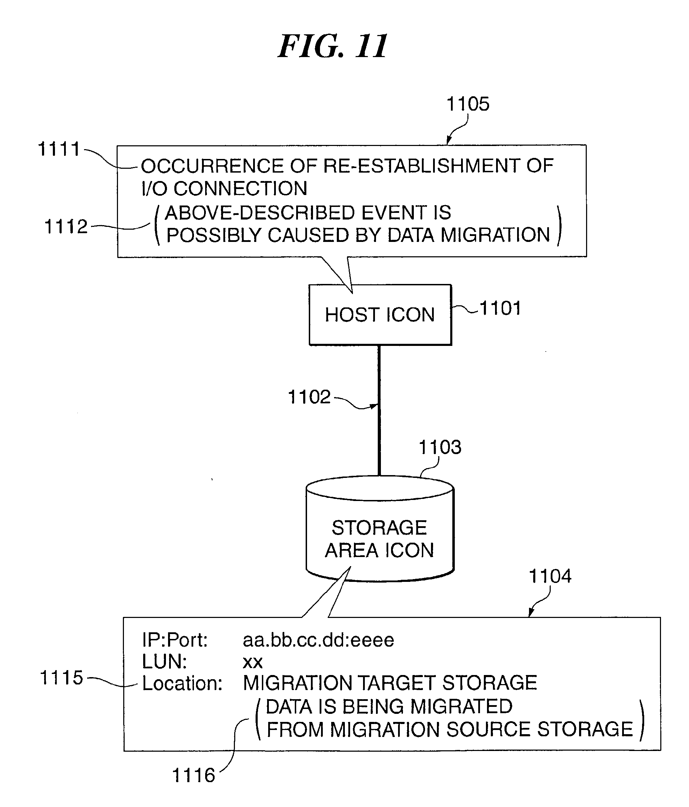

Next, with reference to Fig. 11, the description will be made of a display example of the display screen during data migration. A host icon 1101 is an icon meaning the host.

A storage area icon 1103 is an icon indicating a storage area.

A path 1102 is a line drawn from or to a storage area to be used by the host. In this respect, as a method for determining the storage area to be utilized by the host, there is a method for determining whether or not there arose access from the host to the storage area within a fixed time period in the past, or whether or not the host performed a log-in process of the storage subsystem including the storage area, and any other criterion than this one may be used.

A host event 1105 is a message to be displayed when some event occurs in a host corresponding to the host icon 1101 . The host event 1105 includes a general message 1111 to be displayed when an event occurs, and an explanatory message 1112. The explanatory message 1112 is displayed only concerning an event in which there is the possibility that it has occurred as a result of a data migration process, and indicates that there is the possibility that the event has occurred because of the data migration process. This can be distinguished by providing an operation or a function for determining, when, for example, an event occurs, whether or not the event occurred as a result of data migration, and whether or not the event occurred during a data migration period. It is displayed that it is an event that occurred as a result of the data migration process, whereby any side effect of the data migration can be easily determined.

In this respect, the host event 1105 may include any other information than the general message 1111 and the explanatory message 1112. In the present screen example, when path switching according to the first embodiment has been performed, re-establishment of I/O connection which may be issued from the host A 120A is shown as an example of the event.

Storage area information 1104 has an area displaying information of a storage area corresponding to the storage area icon 1103 , and at least storage area positional information 1115. In this respect, the storage area information 1104 may include any other information than this one, and includes, in the present screen example, IP information and LUN information, which are parameters required in order to access to the storage area.

The storage area positional information 1115 is information concerning a storage subsystem in which there exists a corresponding storage area. Before the data migration, the present information indicates the migration source storage subsystem 100, and after the data migration, the migration target storage subsystem 110. In the case of during the data migration, this information displays either the migration source storage subsystem 100 or the migration target storage subsystem 110, and displays a message, like message 1116, indicating that the storage area concerned is migrating from the migration source storage subsystem 100 to the migration target storage subsystem 110.

In this respect, the present invention is not restricted to the above-described embodiments, and can assume further various constructions without departing from the gist of the present invention. The function 231, and the functions 831, 832 in the migration processing computer 130 shown in, for example, Fig. 1 or Fig. 8 may be intensively provided within the computer for management 810. If performed in this manner, the migration processing computer 130 will become unnecessary to reduce the amount of hardware.

According to the present invention, since the access target is switched from the migration source storage subsystem to the migration target storage subsystem by changing the ARP information of the host and further by the migration source storage subsystem refusing access from the host, there is no need to replace cables connected to the host which uses the storage subsystem, and for the administrator to execute the command for each host.

Also, since a configuration operation of the migration target storage subsystem that becomes a complicated operation is automatically performed by means of the software, it is possible to reduce failures in the data migration process based on wrong configuration.

Further, a condition of the data migration is displayed on the display screen connected to the network, and it is displayed that there is the possibility that the even occurs as a result of the data migration, whereby the system administrator is capable of monitoring the storage while taking into account the data migration.

## Claims

1. An information processing system, comprising:
a host computer connected to a network, having a function for issuing an I/O;
a first storage subsystem in which a storage area for storing data is formed, for processing an I/O to be transmitted from the host computer through the network to the storage area;
a second storage subsystem for processing the I/O to be transmitted from the host computer through the network, and becomes a migration target of data from the first storage subsystem; and
a data migration device connected to the first and second storage subsystems through a management network, for processing data migration, the data migration device configuring the second storage subsystem and forming a storage area on the basis of configuration information concerning the first storage subsystem, instructing for refusing an I/O request from the host computer to the first storage system, and instructing for changing the access target from the first storage subsystem to the second storage subsystem by changing an information that a network communication protocol of the host computer has and that concerns the first storage subsystem.

2. The information processing system according to Claim 1, wherein the data migration device acquires information from a management interface which the first storage subsystem has, and on the basis of the acquired information, configures the second storage subsystem and thereafter executes data migration.

3. The information processing system according to Claim 1, wherein the data migration device notifies an external computer connected to the data migration device of information relating to a data migration process.

4. The information processing system according to Claim 3, wherein the data migration device issues a notice of commencement to the external computer before executing the data migration process, and issues a notice of termination after executing the data migration process.

5. An information processing system, comprising:
a host computer connected to a network, having a function for issuing an I/O;
a first storage subsystem in which a storage area for storing data is formed, for processing an I/O to be transmitted from the host computer through the network to the storage area;
a second storage subsystem for processing an I/O to be transmitted from the host computer through the network, and becomes a migration target of data from the first storage subsystem;
a data migration device having means for configuring the second storage subsystem on the basis of information concerning configuration of a storage area which the host computer regards as a target of access formed in the first storage subsystem, and means for migrating data from the first storage subsystem to the second storage subsystem and for switching an access path from the host computer to the storage area from the first storage subsystem to the second storage subsystem; and
a computer for management having means connected to the host computer, the first storage subsystem, the second storage subsystem and the data migration device through a network for management, for receiving a notice concerning data migration from the data migration device, and display means for displaying conditions of the data migration from the first storage subsystem to the second storage subsystem.

6. The information processing system according to Claim 5, wherein at least one event which is possible to occur as a result of the data migration is retained in advance, and wherein when an event occurs, information to the effect that the event occurs relating to the data migration is displayed on the display means together with information of occurrence of the event.

7. The information processing system according to Claim 1, wherein the host computer issues an I/O request based on an iSCSI protocol to the first or second storage subsystem.

8. The information processing system according to Claim 1, wherein the host computer has restoring means for establishing the I/O connection again when I/O connection with the first storage subsystem or the second storage subsystem is cut.

9. A device for controlling migration of data between a first storage subsystem and a second storage subsystem, which processes an I/O to be transmitted from a host computer through a network, comprising:
means for configuring the second storage subsystem which becomes a migration target of data on the basis of information concerning configuration of the first storage subsystem;
means for instructing to cut I/O connection between a network node and the first storage subsystem;
means for changing an IP address of the first storage subsystem;
means for causing the first storage subsystem to refuse an I/O request from any other than the second storage subsystem;
means for assigning the IP address that the first storage subsystem used in the past to the second storage subsystem;
means for transmitting information that a path has been switched to the second storage subsystem; and
means for instructing to move data of a storage area existing in the first storage subsystem to the second storage subsystem.

10. A method for controlling migration of data between storage subsystems, comprising the steps of:
configuring a second storage subsystem for reading out configuration information from a first storage subsystem, and for configuring, on the basis of the information, a second storage subsystem which becomes a migration target of data and creating a storage area;
cutting I/O connection between a network node and the first storage subsystem;
changing an IP address of the first storage subsystem;
causing the first storage subsystem to refuse an I/O request from any other than the second storage subsystem;
assigning the IP address that the first storage subsystem used in the past to the second storage subsystem;
transmitting information that a path has been switched to the second storage subsystem; and
instructing to move data of the storage area existing in the first storage subsystem to the second storage subsystem.

11. The method for controlling migration of data between storage subsystems according to Claim 10, wherein when a storage subsystem based on an iSCSI protocol is connected to a network, I/O connection should be cut by transmitting a termination notice of TCP connection.

12. The method for controlling migration of data between storage subsystems according to Claim 10, wherein the IP address is changed by use of, after the IP address configured to the first storage subsystem is stored, assigning another IP address not used by a network node to the first storage subsystem.

13. The method for controlling migration of data between storage subsystems according to Claim 10, wherein the second storage subsystem is requested to transmit path switching information, and transmit the MAC address and the IP address that have been assigned to the second storage subsystem to a host or node connected to the network.

14. The method for controlling migration of data between storage subsystems according to Claim 10, further comprising the steps of:
selecting a storage area which exist in the first storage subsystem and to which is not assigned LUN;
assigning LUN which is currently not in use to the selected storage areas of the first storage subsystem; and
issuing an I/O request from the second storage subsystem to the selected storage area using the assigned LUN in order to migrate the selected storage area.

15. The method for controlling migration of data between storage subsystems according to Claim 10, further comprising the steps of:
detecting a failure of the I/O connection with the first storage subsystem, and establishing the I/O connection to the first or second storage subsystem if the I/O connection has been cut, by the host which issues an I/O request and which is connected to the network.

16. The method for controlling migration of data between storage subsystems according to Claim 10, further comprising the step of displaying a condition of data migration on a display screen through an icon.

17. The method for controlling migration of data between storage subsystems according to Claim 10, further comprising the steps of:
determining whether or not an event that has occurred is an event that occurs as a result of the data migration; and
displaying, when it is found to be an event that occurs as a result of the data migration, the event together with information including a message concerning the event on the display screen.

18. A method for migrating data between storage subsystems connected to a network, comprising the steps of:
configuring, on the basis of information concerning configuration of a first storage subsystem, a second storage subsystem which becomes a migration target of data;
cutting I/O connection between a network node and the first storage subsystem;
changing an IP address of the first storage subsystem;
causing the first storage subsystem to refuse an I/O request from any other than the second storage subsystem;
assigning the IP address that the first storage subsystem used in the past to the second storage subsystem;
instructing to move data of a storage area existing in the first storage subsystem to the second storage subsystem; and
displaying a condition of data migration on a display screen.

19. The method for migrating data between storage subsystems connected to a network according to Claim 18, further comprising the steps of:
determining whether or not an event that has occurred is an event that occurs as a result of the data migration; and
displaying, when it is found to be an event that occurs as a result of the data migration, a condition of the event on a display screen through a message and an icon.

20. An executable program on a computer having a function for migrating data between storage subsystems connected to a network, comprising:
a function of configuring, on the basis of information concerning configuration of a first storage subsystem, a second storage subsystem which becomes a migration target of data;
a function of cutting I/O connection with a network node and the first storage subsystem;
a function of changing an IP address of the first storage subsystem;
a function of causing the first storage subsystem to refuse an I/O request from any other than the second storage subsystem;
a function of assigning the IP address that the first storage subsystem used in the past to the second storage subsystem; and
a function of instructing to move data of a storage area existing in the first storage subsystem to the second storage subsystem.
